# EUROPÄISCHE PATENTSCHRIFT

(11) **EP 3 644 148 B1**
(45) Veröffentlichungstag und Bekanntmachung des Hinweises auf die Patenterteilung: **15.12.2021**
(21) Anmeldenummer: 19204460.0
(22) Anmeldetag: 22.10.2019
(51) Int. Cl.: G05B 19/042, B60W 50/04

(54) **TESTTERMINAL FÜR TESTS AN EINER FAHRZEUG-INFRASTRUKTUR**
TEST TERMINAL FOR TESTS OF AN INFRASTRUCTURE OF A VEHICLE
TERMINAL D'ESSAI PERMETTANT DES TESTS D' UNE INFRASTRUCTURE DE VÉHICULE

(30) Priorität: 22.10.2018 AT 509112018
(43) Veröffentlichungstag der Anmeldung: 29.04.2020
(73) Patentinhaber: AVL List GmbH, 8020 Graz (AT)
(72) Erfinder: Wurzinger, Jürgen, 8160 Weiz (AT)
(74) Vertreter: Patentanwälte Pinter & Weiss OG

(56) Entgegenhaltungen:
- EP-A1- 2 088 439
- DE-A1-102006 021 357
- US-A1- 2010 079 301

## Beschreibung

Die gegenständliche Erfindung betrifft ein Testterminal zur Unterstützung einer ausführenden Person bei einem mit einer Fahrzeuginfrastruktur durchgeführten Testlauf, wobei das Testterminal zumindest eine Recheneinheit, zumindest eine Benutzerschnittstelle und zumindest eine Datenschnittstelle, welche in der Lage ist, Daten von Komponenten der Fahrzeuginfrastruktur zu empfangen, aufweist.

Um bei einer Testfahrt mit einem Fahrzeug ein aussagekräftiges Ergebnis zu erhalten, sind sowohl bei der Testplanung, als auch bei der Testfahrt selbst und bei der Nachbearbeitung viel Erfahrung und eine hohe Kompetenz des Testteams erforderlich. Insbesondere benötigt (benötigen) die die Testfahrt ausführende(n) Person(en), z.B. ein Testfahrer und/oder ein Kalibrierungsingenieur, ein hohes Maß an Erfahrung, um die für den Testlauf erforderlichen Manöver gemäß den Vorgaben durchzuführen.

Im Zuge der Testplanung wird eine Tabelle mit Anweisungen und Kriterien erstellt, die die ausführende Person während der Testfahrt ausführen muss. Da es nicht immer möglich ist, die Anweisungen während der Fahrt zu lesen, müssen diese oft vor der Fahrt auswendig gelernt werden. Gegebenenfalls kann eine weitere Person erforderlich sein, die entsprechend dem Fahrzeugzustand Fahranweisungen gibt. Die Messsignale können beispielsweise mithilfe externer Geräte, die beispielsweise an ein internes Netz des Testfahrzeugs oder an eigens vorgesehene Sensoren angeschlossen sind, in ein mitgeführtes Notebook importiert und dort angezeigt werden. Im Falle von Testfahrten auf Teststrecken, im Gelände oder auf öffentlichen Verkehrswegen kann beispielsweise der Testfahrer das Testfahrzeug lenken, während eine zweite Person laufend anhand von Messsignalen überprüft, ob die vom Testfahrer durchgeführten Manöver mit den Testanweisungen übereinstimmen und den an das Manöver gestellten Anforderungen entsprechen. Diese Aufgabe in Echtzeit durchzuführen ist schwierig und bisweilen sogar unmöglich, da teilweise mehrere Signale gleichzeitig überprüft werden müssen und die Updategeschwindigkeit der Signale im Millisekundenbereich liegen kann. Bestimmte, nur kurzfristig auftretende Zustände können somit nicht immer erkannt bzw. teilweise nur zu spät erkannt werden. Gemäß den Testanweisungen kann darüber hinaus vorgeschrieben sein, dass während der Fahrt beispielsweise Kalibriergrößen angepasst werden, um gewünschte Szenarien nachzustellen. Beide diese Tätigkeiten bergen das Risiko, gefährliche Fahrzeugzustände zu übersehen oder durch Unachtsamkeit und Stress aktiv herbeizuführen.

Nach erfolgreichem Abschluss des durchgeführten Tests müssen die gemessenen Signale noch einmal überprüft und manuell eine maßgeschneiderte Auswertung durchgeführt werden.

Diese Tätigkeiten erfordern ein hohes Maß an Erfahrung, unabhängig davon, ob ein Testlauf in einer öffentlichen (Straßen-)Umgebung, im Gelände, auf einer Teststrecke oder an einem Prüfstand durchgeführt wird.

US 2010079301 A1 offenbart Vorrichtungen und Verfahren zur Durchführung von Testabläufen zur Sicherstellung der Betriebsfähigkeit ("past-assembly test) einer fahrerbetriebenen Maschine, z.B. einem Radlader oder ähnliches. Dem Fahrer wird eine Abfolge an einzelnen Tests (z.B. ein Bremsentest) vorgeschrieben und deren Erfolg wird protokolliert. Jedem Test sind bestimmte Kriterien zugeordnet, die vom System überwacht werden (z.B.: "hält die Bremse?"). Jeder Test wird als "pass" oder "fail" bewertet.

DE 102006021357 A1 offenbart Vorrichtungen und Verfahren zur Unterstützung eines Testfahrers im Automotive-Bereich. Die Vorrichtung soll anhand einer Positionsbestimmung Fahranweisungen geben, die dem Fahrer ermöglichen, ein zuvor (z.B. bei einer vorherigen Fahrt) an einer bestimmten Geoposition gewählte Fahrweise exakt zu reproduzieren. Die korrekte Ausführung kann dem Fahrer auch als Feedback gezeigt werden.

EP 2 088 439 A1 offenbart eine Funktionsüberprüfung eines Fahrzeugs in Form von Testschritten, denen Zielvorgaben zugewiesen sind. Die Zielvorgaben werden einem Fahrer an einer Ausgabeeinheit angezeigt. Der Grad der Erfüllung einer Zielvorgabe wird überwacht und bei erfüllter Zielvorgabe wird der nächste Testschritt aktiviert. Das erfordert, dass jeder Testschritt gemäß den Zielvorgaben abgeschlossen wird, um die Funktionsüberprüfung beenden zu können. Auf unerwartete Situation während der Funktionsüberprüfung kann damit nicht reagiert werden, was zu unsicheren Situationen für das Fahrzeug und den Fahrer führen kann.

Es ist eine Aufgabe der gegenständlichen Erfindung, Verfahren und Vorrichtungen bereitzustellen, die die Planung, Durchführung und Auswertung von Testläufen vereinfachen und deren Qualität verbessern und die Durchführung der Testläufe sicherer machen.

Diese und weitere Aufgaben werden erfindungsgemäß durch die Merkmale der unabhängigen Ansprüche gelöst. Das System erlaubt auch relativ unerfahrenen Fahrern die Ausführung sehr komplexer Manöver und Testabläufe, da ständig eine Rückmeldung über die Qualität der Ausführung verfügbar ist. Dadurch kann der ausführenden Person auch die Möglichkeit geboten werden, ein Manöver zu wiederholen, falls dieses nicht erfolgreich absolviert wurde. Dadurch lässt sich ein "First-Time-Right"-Zugang verwirklichen. Dies bedeutet beispielsweise, dass die ausführende Person nur einmal im Fahrzeug sitzen muss und bereits unmittelbar nach dem Ende der Testfahrt (bzw. auch schon währenddessen) weiß, dass alle Manöver korrekt abgehandelt wurden bzw. werden. Bislang war es hingegen durchaus möglich, dass erst nach Ende der Fahrt im Rahmen der Auswertung festgestellt wurde, dass die Ergebnisse zum Teil nicht verwertbar sind und man die Fahrt nochmals durchführen muss.

Als "Fahrzeuginfrastruktur" wird im Zusammenhang mit der gegenständlichen Offenbarung eine zusammengehörige Einheit an Komponenten bezeichnet, die den zu testenden Gegenstand ausbilden. Es kann sich bei der Fahrzeuginfrastruktur um ein fertiges, straßentaugliches Fahrzeug handeln, oder aber auch um einen fahrtauglichen oder einen nicht fahrtauglichen Prototyp. Demgemäß kann der Testlauf eine tatsächliche Straßen- bzw. Geländefahrt umfassen, oder sie kann teilweise oder vollständig an einem Prüfstand durchgeführt werden. Gegebenenfalls kann die Fahrzeuginfrastruktur nur einen Teil eines Fahrzeuges umfassen, der an einem Prüfstand betrieben wird. Weiters kann die Fahrzeuginfrastruktur simulierte Komponenten umfassen, etwa in der Form einer Hardwarein-the-Loop-Simulation. Der Begriff "Fahrzeug" ist auch nicht auf Landgebundene Fahrzeuge beschränkt, sondern umfasst Luft-, Wasser- und Landgebundene Fahrzeuge jeglicher Art.

In vorteilhafter Weise kann die Benutzerschnittstelle zumindest einen Bildschirm und zumindest einen Lautsprecher aufweisen. Dadurch lassen sich Anweisungen und Informationen an den Fahrer akustisch und visuell signalisieren. Die Benutzerschnittstelle kann entweder in die Recheneinheit integriert sein (wie dies z.B. bei einem Laptop oder Tabletcomputer der Fall ist), andererseits können aber auch "externe" Geräte als Benutzerschnittstellen verwendet werden, die mit der Recheneinheit verbunden sind, z.B. ein Bildschirm, eine Eingabemöglichkeit, Lautsprecher, zusätzliche Smartphones oder Tabletts, Touchscreens, etc.

In einer vorteilhaften Ausführungsform kann die Benutzerschnittstelle ein Eingabegerät aufweisen. Dadurch können vor und auch während des Testablaufs Anweisungen in das Testterminal eingegeben werden. Die Eingabegeräte können als herkömmliche Tastatur und/oder Maus ausgeführt sein, oder sie können auf die Verwendung spezifisch abgestimmte andere Geräte aufweisen, wie etwa Trackpads, Joysticks, Touchscreens, etc. oder beispielsweise auch ein Mikrophon zur Sprachsteuerung. Weiters können als Eingabegeräte Vorrichtungen zur Erkennung und Auswertung von Gesten vorgesehen sein, beispielsweise eine mit einer Gestenauswertung verbundene Videokamera oder auch eine andere Sensoranordnung, die Gesten erkennen kann.

In vorteilhafter Weise kann die Benutzerschnittstelle ausgebildet sein, akustische und/oder visuelle Signale über zumindest eine in der Fahrzeuginfrastruktur vorgesehene Signalisierungseinrichtung auszugeben. Dies erlaubt die Nutzung von spezifisch für die jeweilige Fahrzeuginfrastruktur angepasster Geräte, wie etwa eingebauter Car-HiFi-Geräte oder Head-Up-Displays. Die dazu erforderliche Kommunikation kann beispielsweise über dieselbe Datenschnittstelle erfolgen, über die die Fahrzeugdaten empfangen werden. Bevorzugter Weise kann die Datenschnittstelle erfindungsgemäß an ein internes Netzwerk, insbesondere an ein Bussystem der Fahrzeuginfrastruktur anschließbar sein. Dadurch lassen sich Messwerte direkt aus den Fahrzeug-Telemetriedaten auslesen, die über das Bussystem kommuniziert werden. Auch lässt sich das Testterminal auf einfache Weise mit Steuereinheiten der Fahrzeuginfrastruktur verbinden, beispielsweise einer zentralen Motorsteuerung. Zu Beispielen von Bussystemen und entsprechenden Schnittstellen, die insbesondere im Fahrzeugbereich eingesetzt werden, zählen CAN, Flex-Ray, Automotive Ethernet, Diagnoseschnittstellen, und Systeme vergleichbarer Standards.

Gemäß einer weiteren vorteilhaften Ausführungsform kann die Datenschnittstelle an eine in der Fahrzeuginfrastruktur vorgesehene Schnittstelle, insbesondere an eine standardisierte Schnittstelle, anschließbar sein. Dies erleichtert und beschleunigt die Installation des Testterminals an der jeweiligen Fahrzeuginfrastruktur. Als "standardisierte Schnittstelle" werden Schnittstellen gemäß allen einschlägigen Standards bezeichnet, die für die jeweilige Fahrzeuginfrastruktur vorgesehen sind. Zu Beispielen solcher Schnittstellen bzw. Standards zählen OBD, XCP, CCP, CAN, jeweils entweder direkt oder über eine Dritt-Soft-/Hardware, wie etwa ETAS INCA, ATI Vision, Vector Canape, etc.

Die gegenständliche Erfindung betrifft weiters ein in ein Testterminal implementiertes Verfahren zur Unterstützung einer ausführenden Person bei einem mit einer Fahrzeuginfrastruktur durchgeführten Testlauf, wobei das Testterminal zumindest eine Recheneinheit, zumindest eine Benutzerschnittstelle und zumindest eine Datenschnittstelle, welche in der Lage ist, Daten von Komponenten der Fahrzeuginfrastruktur zu empfangen, aufweist, wobei das Verfahren die folgenden Schritte aufweist: Festlegen eines Testablaufplans mit einer vordefinierten Abfolge an auszuführenden Manövern, Definieren von Kriterien für jedes Manöver, Starten des Testlaufs, nacheinander Ausführen der im Testablaufplan definierten Manöver, jeweils umfassend Laden der für das aktuelle Manöver definierten Kriterien, Signalisieren der Kriterien an eine ausführende Person, Ermitteln und Speichern von aktuellen Messdaten der Fahrzeuginfrastruktur, Überwachen der Kriterien durch Vergleich mit den aktuellen Messdaten der Fahrzeuginfrastruktur, und Abschließen des aktuellen Manövers bei Erreichen definierter Zielkriterien.

Erfindungsgemäß weist jedes Manöver eine definierte Abfolge an Submanövern auf, wobei für jedes Manöver und/oder jedes Submanöver Kriterien definierbar sind, und wobei das Ausführen eines Manövers das Nacheinander Ausführen der für dieses Manöver definierten Submanöver umfasst, jeweils umfassend: Laden von für das aktuelle Submanöver definierten Kriterien, Signalisieren der Kriterien an eine ausführende Person, Ermitteln und Speichern von aktuellen Messdaten der Fahrzeuginfrastruktur, Überwachen der Kriterien durch Vergleich mit den aktuellen Messdaten der Fahrzeuginfrastruktur, und Abschließen des Submanövers nach korrekter Ausführung. Die Einteilung des Testablaufplans in Manöver und Submanöver erlaubt eine einfache, schnelle und effektive Definition des Testablaufplans in einer vom Testterminal ausführbaren Anweisungsstruktur. Nicht nur den Submanövern, sondern auch dem Manöver können Kriterien zugeordnet werden, wobei die dem Manöver zugeordneten Kriterien für alle unter dem Manöver zusammengefassten Submanöver verwendet werden.

In den hierin beschriebenen Ausführungsformen umfasst jedes Manöver zumindest ein Submanöver, sodass die Ausführung eines Manövers immer die Ausführung zumindest eines Submanövers erfordert. Diese hierarchische Gliederung in Manöver und Submanöver dient der Vereinfachung der Konfiguration des Testablaufplans, es wäre jedoch auch möglich, auf diese hierarchische Gliederung zu verzichten und den Testablaufplan als lineare Abfolge nicht hierarchisch gegliederter Manöver (d.h. ohne Submanöver) zu definieren. Es liegt im Können eines Durchschnittsfachmanns, auf die Vorteile, die die hierarchische Gliederung mit sich bringt, zu verzichten, und die Erfindung alleine auf Basis einzelner, nicht hierarchisch gegliederter Manöver umzusetzen. Es wird daher darauf hingewiesen, dass es beabsichtigt ist, dass auch solch eine, nicht hierarchische Manöverdefinition in den Schutzbereich der gegenständlichen Erfindung fallen soll, sofern die Ansprüche keine gegenteilige Anweisung geben. Die Begriffe "Manöver" und "Submanöver" können daher synonym verwendet werden, sofern der jeweilige Kontext nicht einer solchen synonymen Auslegung widerspricht.

Der Begriff "(Sub)Manöver" umfasst nicht nur Tätigkeiten, die zu einem Fahrmanöver an sich gehören (d.h. insbesondere Lenken, Betätigen der Pedale, Schalten), sondern auch alle anderen Tätigkeiten, die von einer ausführenden Person im Zuge einer Testfahrt auszuführen sind. Zu Beispielen dafür zählen das Betätigen von Schaltern und Druckknöpfen jeglicher Art (z.B. Scheibenwischer, Licht, Fensterheber, etc.) oder das Verstellen eines Wertes (z.B. Heizung, Lüftung, Sitzposition, Lichtstufe, Tempomat, etc.). Der Begriff umfasst nicht nur die Tätigkeiten, die im Zuge einer "normalen" Fahrt vom Fahrer durchgeführt werden, sondern auch Tätigkeiten, die spezifisch für einen Testlauf auszuführen sind, zum Beispiel das bereits erwähnte Ändern von Kalibriergrößen. Üblicherweise sind jedem Manöver und Submanöver Kriterien zugeordnet, dies ist jedoch nicht zwingend der Fall, da auch Manöver bzw. Submanöver ohne eigene Kriterien sinnvoll sein können.

In vorteilhafter Weise kann nach dem Abschließen des letzten Manövers eine Auswertung von während des Ausführens gespeicherten Daten und gegebenenfalls eine automatisierte Reporterstellung erfolgen. Dies erleichtert die Nachbearbeitung des Testlaufs und erlaubt eine Vereinheitlichung der Testberichtstruktur.

Gemäß einer weiteren vorteilhaften Ausführungsform könne während des Testlaufs Änderungen, insbesondere Änderungen von Kalibriergrößen, an der Fahrzeuginfrastruktur vorgenommen werden. Die Änderungen können beispielsweise im Testablaufplan definiert werden, oder sie können von einer ausführenden Person während des Testlaufs "händisch" eingegeben werden. Die Änderungen können auch gemäß einem Optimierungsalgorithmus durchgeführt werden, wobei durch systematische Änderungen ein Zielwert (oder mehrere Zielwerte) optimiert wird (werden).

Alle Änderungen können gegebenenfalls dokumentiert und gespeichert werden, sodass ein Zurückstellen der Fahrzeuginfrastruktur auf die Ausgangsposition jederzeit möglich ist. In vorteilhafter Weise kann eine Funktionalität implementiert sein, mit der nach einem Abschluss oder Abbruch des Testlaufs zuvor vorgenommene Änderungen an der Fahrzeuginfrastruktur rückgängig gemacht werden können, beispielsweise in Form einer von dem Testterminal durchgeführten automatischen oder durch Benutzereingriff ausgelösten Rückstellung.

In einer weiteren vorteilhaften Ausgestaltung der Erfindung können zum Definieren des Testablaufplans in einer Manöverbibliothek Manöver zur Auswahl bereitgestellt werden. Dies erleichtert die Erstellung von Testablaufplänen und erlaubt die Wiederbenutzung und gegebenenfalls Anpassung bereits zuvor erstellter Manöver.

In einem weiteren Aspekt umfasst die Erfindung ein Computerprogramm umfassend Befehle, die bei der Ausführung des Programms durch die Recheneinheit eines oben beschriebenen Testterminals dieses Testterminal dazu veranlassen, die zuvor beschriebenen Verfahrensschritte auszuführen.

Die gegenständliche Erfindung wird nachfolgend unter Bezugnahme auf die Figuren 1 bis 2 näher erläutert, die beispielhaft, schematisch und nicht einschränkend vorteilhafte Ausgestaltungen der Erfindung zeigen. Dabei zeigt
Fig. 1 eine schematisierte Block-Darstellung einer beispielhaften Fahrzeuginfrastruktur, welche mit dem erfindungsgemäßen Testterminal versehen ist, und
Fig. 2 ein Ablaufdiagramm zur Erläuterung einer beispielhaften Ausführungsform des erfindungsgemäßen Verfahrens.

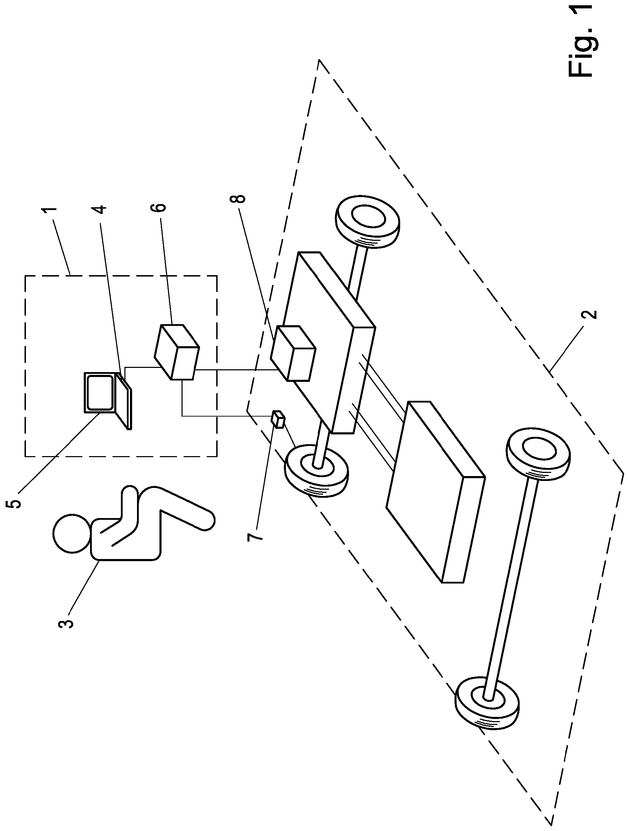

Fig. 1 zeigt eine schematische Darstellung eines erfindungsgemäßen Testterminals 1, das an eine Fahrzeuginfrastruktur 2 angeschlossen ist. Das Testterminal 1 umfasst zumindest eine Recheneinheit 4 und zumindest eine Datenschnittstelle 6. Die Recheneinheit 4 weist zumindest eine Benutzerschnittstelle 5 auf, über die einer den Testlauf ausführenden Person 3 vor, während und nach einer Testfahrt Informationen insbesondere auf optische und/oder akustische Weise signalisiert werden können. Bevorzugter Weise umfasst die Benutzerschnittstelle 5 einen Bildschirm und einen Lautsprecher. In Fig. 1 ist als Recheneinheit 4 und Benutzerschnittstelle 5 ein herkömmliches Notebook vorgesehen, auf dem eine entsprechende Programmlogik ausgeführt wird. Als Benutzerschnittstelle 5 sind dabei einerseits der Bildschirm und die Lautsprecher des Notebooks anzusehen, die die Kommunikation vom Testterminal 1 zu der ausführenden Person 3 ermöglichen, andererseits können über die Tastatur und das Mousepad (oder andere bekannte Eingabegeräte) auch Daten in der entgegengesetzten Richtung, d.h. von der ausführenden Person 3 (bzw. einer der ausführenden Personen) in das Testterminal 1 eingegeben werden.

Als "ausführende Person" werden im Zusammenhang mit der gegenständlichen Offenbarung unabhängig von deren Anzahl alle Personen bezeichnet, die während des Testlaufs auf den Ablauf des Testlaufs Einfluss nehmen können. Bei Testfahrten mit (gelenkten) Fahrzeugen wird die ausführende Person üblicherweise als Testfahrer bezeichnet, es kann aber auch ein Beifahrer, der den Ablauf der Testfahrt verändern kann, in gleicher Weise als ausführende Person bezeichnet werden. Die Bezeichnung "ausführende Person" ist somit nicht auf Testfahrer beschränkt. Beispielsweise gibt es im Zusammenhang mit Prüfstandtests ebenfalls zumindest eine ausführende Person und auch eine Testfahrt eines vollautonomen Fahrzeugs wird üblicherweise von einer ausführenden Person durchgeführt.

Die dargestellte Variante stellt lediglich eine beispielhafte Ausführungsform dar und das Testterminal kann auf zahlreiche andere Weisen ausgeführt sein. Beispielsweise können die Recheneinheit 4 und die Benutzerschnittstelle 5 durch eigene Geräte bereitgestellt werden. Anstelle des Notebooks (oder in Ergänzung zu diesem) können mobile Endgeräte verwendet werden, wie etwa Smartphones, Tablet-Computer, oder ähnliches. Gegebenenfalls können akustische und/oder visuelle Signale über zumindest eine in der Fahrzeuginfrastruktur 2 vorgesehene Signalisierungseinrichtung ausgegeben werden. Beispielsweise können akustische Signale über Bordlautsprecher ausgegeben werden, die in der Fahrzeuginfrastruktur verbaut sind, und/oder visuelle Signale können über eine im Fahrzeug vorgesehene Anzeigeeinheit, beispielsweise über ein Head-Up-Display oder eine andere in der Fahrzeuginfrastruktur 2 vorgesehene Anzeige bereitgestellt werden. Auf diese Weise kann das Testterminal 1 beispielsweise als größenmäßig minierte Komponente ausgeführt werden, die einfach in eine entsprechende Schnittstelle eines Fahrzeugs (vorzugsweise eine standardisierte Schnittstelle) eingesteckt werden muss.

Das Testterminal 1 weist weiters eine Datenschnittstelle 6 auf, die in der Lage ist, Daten von Komponenten der Fahrzeuginfrastruktur 2 zu empfangen und gegebenenfalls auch an diese zu senden. Die Datenschnittstelle 6 kann dazu beispielsweise an ein internes Netzwerk der Fahrzeuginfrastruktur 2 angeschlossen sein, beispielsweise an ein Bussystem, wie etwa einen CAN-Bus oder ähnliches. In vorteilhafter Weise kann die Datenschnittstelle 6 die Verbindung zu den Komponenten der Fahrzeuginfrastruktur 2 beispielsweise über eine standardmäßig im Fahrzeug vorgesehene Schnittstelle herstellen. Zusätzlich kann die Datenschnittstelle 6 auch Daten von einem oder mehreren externen Sensoren 7 erhalten, die nicht Teil der Fahrzeuginfrastruktur 2 und eigens für Testzwecke vorgesehen sind.

Zu Beispielen von Komponenten der Fahrzeuginfrastruktur 2 zählen jegliche elektronische Fahrzeugsteuergeräte, wie etwa Motorsteuergeräte, Getriebesteuergeräte, ABS-Steuergeräte, ESP-Steuergeräte, Steuergerät für Fahrerassistenzsysteme, Steuergeräte für die Abgasnachbehandlung, etc., beliebige Sensoren des Fahrzeugs selbst, beispielsweise Temperatursensoren, Motordrehzahlsensoren, Raddrehzahlsensoren, Sensoren für den Lenkwinkel, die Gaspedalstellung, die Drosselklappenstellung, den Druck der Kraftstoffeinspritzung, etc., sowie auch etwaige zusätzliche am Fahrzeug angeschlossene oder mitgeführte Messgeräte, wie etwa Partikelmessgeräte, Emissionsmessgeräte, Kraftstoffverbrauchsmessgeräte, etc.

Zu Beispielen von Messdaten, die über die Datenschnittstelle 6 von der Fahrzeuginfrastruktur 2 empfangen werden, zählen Signale die den Fahrzeugzustand beschreiben, wie etwa Geschwindigkeit, Motordrehzahl, Bremsdruck, Fehlerspeicher, etc., aber auch Signale, die von zusätzlichen Messgeräten aufgenommen werden, z.B. Informationen zu den Emissionen.

Mit dem Testterminal 1 ist es gegebenenfalls auch möglich, Änderungen an der Fahrzeuginfrastruktur 2 bzw. dem Verhalten der Fahrzeuginfrastruktur vorzunehmen, beispielsweise indem Kalibriergrößen von Komponenten, beispielsweise von Sensoren und/oder Aktuatoren, verändert werden. Zu Beispielen solcher Änderungen zählen die Begrenzung der maximalen Drehzahl oder des Drehmoments für bestimmte Manöver oder die Optimierung bestimmter Fahrzeugkomponenten, wie etwa des Emissions-Ausstoßes in unterschiedlichen Fahrzeugzuständen.

Das erfindungsgemäße Testterminal 1 bietet der ausführenden Person 3, beispielsweise einem Kalibrieringenieur, beim Durchführen vorkonfigurierter Manöver eine direkte audiovisuelle Bewertung und Unterstützung über die Benutzerschnittstelle 5. Zu diesem Zweck führt die Recheneinheit 4 ein Computerprogramm aus, welches in dem Testterminal 1 das im Folgenden beschriebene Verfahren implementiert.

Das vom Testterminal 1 ausgeführte Verfahren stellt sicher, dass selbst unerfahrene Testfahrer effizient Fahrmanöver korrekt absolvieren können, wobei die Konformität mit konfigurierten Kriterien sichergestellt wird. Die Fahrerunterstützung wird realisiert, indem aktuelle Istwerte von Messwerten, die über die Datenschnittstelle 6 von der Fahrzeuginfrastruktur 2 und/oder von externen Sensoren 7 in (Pseudo-)Echtzeit erhalten werden, mit zuvor konfigurierten Sollwerten verglichen werden. Für den Vergleich können unterschiedliche Messsignale verwendet werden, wie zum Beispiel Signale, die direkt von einer Steuereinheit 8 der Fahrzeuginfrastruktur 2 ausgelesen werden, oder Signale die über ein internes Netzwerk der Fahrzeuginfrastruktur 2 aus anderen Komponenten ausgelesen werden, oder Signale, die von externen Sensoren 7 erhalten werden.

Als "Echtzeit" wird im in Zusammenhang mit der gegenständlichen Offenbarung eine Zeitanforderung bezeichnet, bei der jedes Berechnungsergebnis innerhalb einer definierten und auf die Funktionalität des Systems abgestimmten Zeitschranke vorliegt.

Als "Pseudo-Echtzeit" wird in Zusammenhang mit der gegenständlichen Offenbarung eine Echtzeitanforderung bezeichnet, bei der ein Überschreiten einer vorgegebenen maximalen Antwortzeit nicht unmittelbar als Versagen gewertet wird und daher nicht ohne weiteres zum Abbruch des Verfahrens führt.

Die Steuereinheit 8 kann beispielsweise eine zentrale Motorsteuerung (ECU) sein. Die empfangenen bzw. ausgelesenen Signale werden von der Recheneinheit aufgezeichnet, und gegebenenfalls weiterverarbeitet und gespeichert. Zusätzlich können direkte Benutzereingaben, die beispielsweise über die Benutzerschnittstelle 5 in die Recheneinheit 4 eingegeben werden, von der Programmlogik verarbeitet werden, etwa um den Testablauf während der Fahrt abzuändern oder um Kalibrierungskurven von Komponenten der Fahrzeuginfrastruktur 2 gemäß dem Testlauf zu verändern.

Das Testterminal 1 stellt der ausführenden Person 3 demgemäß (Pseudo-) Echtzeitanweisungen zur Verfügung, während es simultan die Eingangssignale aufzeichnet und evaluiert. Dies erlaubt der ausführenden Person 3, geringere Toleranzen einzuhalten, da er während des Fahrens eine sofortige Analyse des aktuellen Status sowie des Trends zu definierten Kriterien eines Manövers erhält, wodurch geringe Abweichungen vom Sollwert schneller erkannt und korrigiert werden können. Darüber hinaus ist es nicht mehr erforderlich, dass der Fahrer die zu absolvierenden Manöver vor dem Beginn des Testlaufs an sich bereits beherrscht, da er durch die audiovisuelle Unterstützung stets die notwendigen Informationen simultan bereitgestellt bekommt.

Nach dem Testlauf werden schließlich die aufgenommenen Messsignale nach weiteren definierten Kriterien automatisch analysiert. Die dadurch erhaltenen Resultate werden daraufhin dem Benutzer präsentiert und können als Bericht exportiert werden.

Zur Vorbereitung, Durchführung und Nachbearbeitung von Testläufen werden dem Benutzer vom Testterminal 1 unterschiedliche Benutzeroberflächen, Hilfsmittel und Verfahren bereitgestellt, die im Folgenden beschrieben werden. Dabei kann die Konfiguration auch an einem vom Testterminal 1 verschiedenen Computersystem definiert und bearbeitet und dann auf das Testterminal 1 geladen werden.

Die Beschreibung (bzw. Definition) vordefinierter Manöver, die im Zuge eines Testlaufs ausgeführt werden können, kann von einem Unterprogramm, das als Editor fungiert, erstellt und/oder verändert werden. Dieses Unterprogramm wird im Zusammenhang mit der gegenständlichen Offenbarung als "Manövereditor" bezeichnet.

Jedes Manöver besteht aus einer beliebigen Anzahl an Schritten oder Anweisungen, welche vom selben oder von einem unterschiedlichen Typ sein können und im Zusammenhang mit der gegenständlichen Offenbarung als "Submanöver" bezeichnet werden. Ein Manöver kann als Abfolge solcher Submanöver definiert werden. Die Schritte und Anweisungen können auch Kalibriervorgänge, das Ändern und Speichern von Variablen (z.B. Platzhalter zur Speicherung von Zuständen für die späteren Auswertung), etc. umfassen.

Neben den Anweisungen zur dynamischen Wertspeicherung (als Variable) und den Kalibriertätigkeiten, existieren drei unterschiedliche Kategorien von Submanövern: ein Steady-State-Typ, ein Transient-Typ und ein User-Input-Typ. Der Steady-State-Typ definiert das Halten eines Zustands (über eine definierte Zeit). Der Transient-Typ definiert das Durchführen eines Übergangs (in einer definierten Zeit). Der User-Input-Typ erfordert eine direkte Eingabe vom Benutzer. Dieser Typ kann bei Signalen verwendet werden, die nicht über die Fahrzeuginfrastruktur aufgezeichnet werden können und somit durch eine Nutzereingabe ersetzt werden. Hierzu zählen beispielsweiße die aktuellen Straßen- und Fahrbedingungen. Ebenso kann dieser Typ verwendet werden, um bestimmte Kriterien während des Testlaufs auf einen vom Nutzer individuell definierten Wert zu setzen, ein Beispiel hierfür ist die Eingabe einer vom Benutzer während der Fahrt erkannten MaximalDrehzahl des Fahrzeugs, die für jedes Fahrzeug unterschiedlich sein kann und somit während der Manöver-Definition nicht bekannt ist. Diese drei grundsätzlichen Kategorien an Submanövern ermöglicht für jedes Manöver die Erstellung einer umfangreichen Manöverstruktur.

Jedes Submanöver kann mit einer beliebigen Anzahl an Kriterien unterschiedlicher Art ergänzt werden, über die die Ausführung des Manövers in definierter Weise bewertet und überwacht werden kann. Über Dynamic-Kriterien lässt sich beispielsweise der Übergang von einem Zustand in einen anderen Zustand überwachen, Steady-State-Kriterien definieren Bedingungen für das Halten eines Zustandes für eine bestimmte Zeit, Entry-Kriterien werden zu Beginn eines Submanövers ausgewertet, Maintain-Kriterien müssen während eines transient-Kriteriums durchgehend eingehalten werden, Abort-Kriterien definieren Abbruchsbedingungen und Complete-Kriterien erlauben es das Manöver vorzeitig erfolgreich zu beenden. Standardmäßig gilt ein Manöver als erfolgreich durchgeführt, wenn alle Schritte erfolgreich ausgeführt wurden. Ein Complete-Kriterium hingegen definiert, welcher Zustand ebenso einen Erfolg darstellt. Wenn beispielsweise überprüft werden soll, ob bei einem bestimmten Fahrverhalten ESP aktiviert wird, ist eine bestimmte Abfolge von Fahrmanövern nötig, um diese Aktivierung auszulösen. Sobald sich jedoch ESP aktiviert, gilt das Manöver als abgeschlossen und das Ziel wurde erreicht.

Des Weiteren können im Manövereditor für die individuellen Submanöver präzise Intervalle für die Durchführdauer des Submanövers, Toleranzwerte für sämtliche Kriterien und das Submanöver an sich, und gegebenenfalls das auditive Feedback während der Testfahrt via Text-Zu-Sprache definiert werden. Für Kriterien können außerdem Schwellwerte konfiguriert werden, ab welchen ein Manöver als fehlgeschlagen interpretiert wird.

In der Konfigurationsumgebung können für jedes Submanöver Hilfstexte formuliert werden, die beim Aufruf des Submanövers der ausführenden Person 3 angezeigt und/oder automatisch vorgelesen werden können.

Zusätzlich erlaubt der Manövereditor, Postprocessing-Kriterien (bzw. Ziele) zu definieren, welche am Ende eines jeden Testlaufs automatisiert evaluiert und präsentiert werden. Die Auswertungsroutine des Programms untersucht hierbei die aufgezeichneten Messdaten auf Schwellwertverletzungen und führt gegebenenfalls weitere zu überprüfende Berechnungen durch. Die weiteren Berechnungen können mithilfe von beliebigen programmierten Zusatzfunktionen (z.B. Concerto Scripting, Python, etc.) umgesetzt werden.

Die Kriterien können Messkanälen zugeordnet werden, die während des Testlaufs aufgezeichnet werden. Aus Gründen der Verständlichkeit ist es bevorzugt, für die Bezeichnung der Kriterien nicht die exakten Kanalbezeichnung zu verwenden, sondern durch sprechende Namen die Bezeichnung der Kriterien generisch, übersichtlich und leicht verständlich zu halten. Die Zuordnung der Kriterien zu den entsprechenden Kanälen der Steuereinheit 8 oder anderer Messinstrumente, wie etwa dem externen Sensor 7, wird vor dem Start des Testlaufs im Manövereditor durchgeführt. Die Zuweisung der Kanäle kann zentral in einem (Firmen-)Netzwerk hinterlegt und in zukünftigen Anwendungen automatisch verknüpft werden. Wenn alle genutzten Kanäle bereits definiert sind, muss daher die Konfiguration der Kanäle nicht erneut durchgeführt werden.

Um eine generische Definition der Manöver zu gewährleisten, die von der jeweiligen Hard- und (Fahrzeug-)Software unabhängig ist, können bei der Manöver-Definition Alias-Namen für die eigentlichen Messsignale verwendet werden. Vor der Durchführung des eigentlichen Testlaufs, werden diese Aliasse dann vom Benutzer mit den tatsächlichen, von der jeweiligen Hardware aufgezeichneten Signalen verknüpft. Dies muss nur einmal geschehen. Die Zuweisung wird in weiterer Folge in einer zentralen Datenbank gespeichert und um den aktuellen Kontext (Fahrzeug, Projekt, Benutzer, etc.) ergänzt. Dies erlaubt es, unterschiedliche Zuweisungen der Aliasse zu den eigentlichen Messsignalen zu speichern und automatisch, basierend auf dem jeweiligen Kontext erneut zuzuweisen.

Die Definition des eigentlichen Testlaufs kann in einem weiteren Unterprogramm erfolgen, das in weiterer Folge hierin als "Konfigurationsumgebung" bezeichnet wird.

Vor dem Start des Testlaufs kann in der Konfigurationsumgebung aus einer Manöverbibliothek (diese kann beliebig durch selbst erstellte Manöver erweitert werden) für den Testlauf eine beliebige Kombination und Abfolge hinterlegter Manöver ausgewählt werden. Diese Auswahl definiert den Umfang des Testlaufs und wird automatisch in eine abzuarbeitende Warteschlange gereiht.

In der Konfigurationsumgebung können auch Postprocessing-Layouts definiert, hinzugefügt und bearbeitet werden. Diese können automatisiert nach dem Testlauf mit den zugehörigen Daten befüllt und somit als Bericht exportiert werden.

Während eines Testlaufs können sowohl einfache, als auch kompliziertere Eingriffe (im Sinne einer Optimierfunktionalität) in das Steuerverhalten der Steuereinheit 8 bzw. in das Verhalten anderer Komponenten der Fahrzeuginfrastruktur 2 vorgenommen werden. Die Eingriffe in das Steuerverhalten können für einen Testlauf in der Konfigurationsumgebung vorab definiert werden, oder aber auch während des Testlaufs "händisch" vorgenommen werden. Die Eingriffe können beispielsweise Veränderungen von Kalibriergrößen umfassen. Ebenso können hierbei Variablenblöcke angelegt werden um den aktuellen Status des Steuergeräts für eine spätere Evaluation abzuspeichern.

Als "Optimierfunktionalität" wird im Zusammenhang mit der gegenständlichen Offenbarung eine zielgerichtete, kontinuierliche Anpassung spezifizierter Steuergrößen verstanden, die dazu dient, einen Zielzustand zu finden.

Die während der Konfiguration erstellte vordefinierte Abfolge an auszuführenden Manövern wird im Zusammenhang mit der gegenständlichen Offenbarung als Testablaufplan bezeichnet. Unabhängig davon, ob die Konfiguration des Testlaufs an dem Testterminal 1 selbst erfolgt, oder an einem anderen Computer, wird der fertige Testablaufplan in einem Speicher der Recheneinheit 4 des Testterminals 1 gespeichert, sodass er von dem Testterminal 1 während des Testlaufs verwendet werden kann.

Wenn die Konfiguration des Testlaufs abgeschlossen und der Testablaufplan im Speicher der Recheneinheit 4 gespeichert ist, kann der eigentliche Testlauf gestartet werden. Dabei werden die für den Testlauf ausgewählten und im Testablaufplan enthaltenen Manöver der Reihe nach abgearbeitet. Nach Beenden eines Manövers wird automatisch das nächste initialisiert. Wird ein Manöver nicht erfolgreich absolviert, so kann beispielsweise die Möglichkeit angeboten werden, dieses Manöver zu wiederholen. Während der Manöverdurchführung werden beim aktuellen Submanöver die definierten Kriterien geladen und diese dem Benutzer entsprechend audiovisuell dargestellt. Diese Darstellung zeigt dabei an, ob das aktuelle Signal von der Idealkurve abweicht (zu hoch, zu niedrig, zu langsam, zu schnell, etc.). Eine dynamische Fortschrittsanzeige, etwa in der Form eines Fortschrittsbalkens oder Ähnlichem, kann zusätzlich signalisieren, wie lange oder wie schnell das Kriterium erfüllt werden soll. Das Erfüllen eines Submanövers kann durch ein Audiosignal oder über die Anzeige bestätigt werden. Die gegebenenfalls für die Submanöver formulierten Hilfstexte können beim Aufruf des Submanövers automatisch vorgelesen werden.

PopUp-Fenster können beispielsweise als Eingabeaufforderung verwendet werden, insbesondere wenn der Testfahrplan Submanöver vom User-Input-Typ verwendet. Dies erlaubt beispielsweise die Verwendung von an sich unzuverlässigen, nicht gemessenen oder nicht messbaren Fahrzeugkanälen oder die Bewertung sonstiger Zustände und Signale durch fahrerbezogene Bestätigungs- und Eingabefelder (die ausführende Person hat dabei beispielsweise die Verantwortung, verlässlich den Status des Kriteriums anzugeben, um das Submanöver mit der Nutzereingabe abzuschließen).

Nach Beenden des Testlaufs werden die gespeicherten Messsignale bezüglich der definierten Auswertungsschritte und Ziele (die zuvor in der Konfigurationsumgebung definiert wurden) evaluiert. Zusätzlich werden Key-Performance-Indikatoren berechnet und vordefinierte Layouts werden mit den ausgewerteten Daten befüllt.

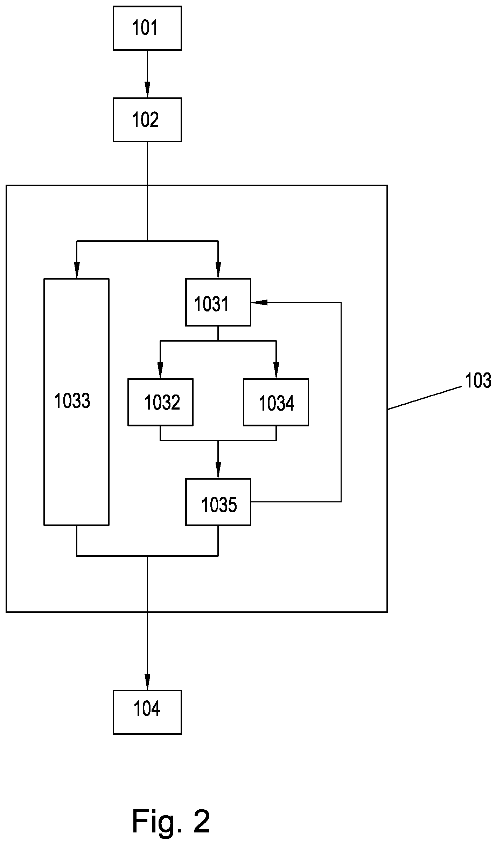

Ein beispielhafter Verfahrensablauf wird im Folgenden unter Bezugnahme auf das in Fig. 2 dargestellte Blockdiagramm beispielhaft beschrieben.

Der in Fig. 2 dargestellte Verfahrensablauf beginnt bei Schritt 101, bei dem ein Testablaufplan mit einer vordefinierten Abfolge an auszuführenden Manövern erstellt wird. Dazu wird zuerst eine Manöverdefinition vorgenommen. Der Anwender definiert eine beliebige Anzahl an Manövern als Sequenzen von Systemzuständen und Kalibriertätigkeiten ("Submanöver) durch eine beliebige Anzahl an Kriterien. Jedes Manöver lässt sich somit als eine Abfolge an Submanövern darstellen. Die Definition des Testablaufplans erfolgt durch eine Auswahl zuvor definierter Manöver mit einer konkreten Abfolge. Weiters werden Messignale zu den zugehörenden Aliassen, die den jeweiligen Systemzustand der Schritte (Erreichen eines Sollzustandes und/oder Durchführung einer Kalibriertätigkeit) eines Manövers definieren, zugewiesen.

Die oben dargelegten Tätigkeiten des Schritts 101 definierten eine Vorbereitungs- und Konfigurationsphase. Diese Tätigkeiten können iterativ wiederholt bzw. überarbeitet werden, bis schließlich ein ausführbarer Testablaufplan für den Testlauf fertiggestellt ist.

Bei Schritt 102 wird der Testlauf gestartet. Der Anwender startet den Testlauf nach dem Verbinden des Testterminals mit den entsprechenden Schnittstellen der Fahrzeuginfrastruktur 2, wobei dies auf der Straße oder auch auf einem Prüfstand erfolgen kann. Mit dem Verbinden wird vorzugsweise die automatische Aufzeichnung der relevanten Messdate der Fahrzeuginfrastruktur 2 gestartet.

Schritt 103 umfasst den eigentlichen Testlauf, wobei die einzelnen Manöver, bzw. die in jedem Manöver definierten Submanöver in der vordefinierten Reihenfolge ausgeführt werden, während aktuelle Messdaten der Fahrzeuginfrastruktur ermittelt und gespeichert werden (1033). Der Schritt der automatischen Aufzeichnung (Ermitteln und Speichern) von Messdaten ist in Fig. 2 als Schritt 1033 dargestellt und erstreckt sich vorzugsweise über den gesamten Ablauf des Testlaufs 103.

Für jedes Submanöver werden zuerst die definierten Kriterien geladen (1031), wobei auch die definierten Systemzustände überprüft werden.

Durch ein audiovisuelles Feedback werden der ausführenden Person der Soll- sowie Istzustand der Fahrzeuginfrastruktur signalisiert (1032) und Anweisungen für die korrekte Durchführung des aktuellen Schrittes gegeben.

Die Einhaltung der Kriterien wird durch einen Vergleich mit den aktuellen Messdaten der Fahrzeuginfrastruktur (2) Überwacht (1034).

Bei Erreichen des Sollzustandes innerhalb der definierten Zeit- und Wertgrenzen sowie weiterer definierter Zielkriterien, wird der aktuelle Schritt (d.h. das entsprechende Submanöver) abgeschlossen (1035) und der nächste Schritt (d.h. das nächste Submanöver) wird automatisch gestartet, bis das letzte Submanöver des letzten Manövers im Testablaufplan ausgeführt wurde, womit der Testlauf endet. Bei Eintreten eines Fehlerzustandes wird je nach Konfiguration des Submanövers und Art des Fehlers vom Testterminal 1 entschieden, ob Korrekturvorschläge angezeigt werden (z.B. Neustart des Manövers/des aktuellen Submanövers, Ausführen eines alternativen Schrittes, kurzfristige Anpassungen der betroffenen Messgröße ohne Abbruch des aktuellen Schrittes, etc.), oder ob das Submanöver, das Manöver bzw. der Testlauf als Ganzes abgebrochen werden soll. Im Falle eines Abbruchs stellt das Testterminal 1 gegebenenfalls sicher, dass ein für Insassen als auch Fahrzeug sicherer Zustand wiederhergestellt wird. Dies wird beispielsweise erreicht, indem zuvor automatisch oder "händisch" getätigte Änderungen am Fahrzeug (z.B. geänderte Kalibriergrößen des jeweiligen Fahrzeugsteuergeräts) rückgängig gemacht werden. Auch bei einem ordnungsgemäßen Beenden des Testlaufs wird ein solcher sicherer Zustand hergestellt.

Nach dem Testlauf erfolgt unter Schritt 104 eine automatisierte Auswertung der zum Testlauf zugehörigen Daten. Die für ein Manöver relevanten Bereiche werden aus den Messdaten extrahiert und die Erfüllung zuvor definierter Zielkriterien wird durch eine Analyse der entsprechenden Signale und/oder der davon abgeleiteten berechneten Größen überprüft.

Schließlich können die Resultate zu einem Report verdichtet werden, der den Testlauf mit einer beliebigen Anzahl von vordefinierten Darstellungen dem Nutzer präsentiert.

Durch die oben beschriebenen Vorrichtungen und Verfahren können zahlreiche Vorteile erzielt werden, die im Folgenden schlagwortartig und beispielhaft zusammengefasst sind.
- Die Anbindung an die Fahrzeuginfrastruktur 2 und die darin vorhandenen Messinstrumenten (die beispielsweise über das Steuergerät 8 erreicht werden können) ermöglicht einen direkten Bezug der relevanten Daten.
- Während der Fahrt ist der Trend der angezeigten Größen immer sichtbar, sodass der Fahrer sofortige Maßnahmen ergreifen kann.
- Ein Audiovisuelles Feedback ermöglicht dem Fahrer während der Manöver in Echtzeit Fehler zu erkennen und schnellstmöglich zu beheben.
- Bei Eintreten eines Fehlerzustandes bietet die Applikation erhöhte Insassen- sowie Fahrzeugsicherheit durch automatisches Wiederherstellen des Ausgangszustandes etwaiger Kalibrieränderungen am Fahrzeug und/oder Durchführen weiterer Kalibriertätigkeiten.
- Möglicher Gefahrenzustände, die durch die Nichterkennung eines gefährlichen Fahrzeugzustands auftreten können, und die aufgrund der Flut an Signalen und ihrer hohen Updaterate im Millisekundenbereich bislang nur schwer oder gar nicht zu erkennen waren, werden vermieden bzw. minimiert.
- Während der Testläufe können automatisiert entsprechend der Definition der Manöver Kalibriergrößen angepasst werden, um gewünschte Szenarien nachzustellen. Dies geschieht in (Pseudo-)Echtzeit unter Minimierung von Eingabefehlern, da die Konfiguration bereits im Vorfeld passiert, und der Manöverablauf validiert werden kann.
- Nach erfolgreichem Abschluss eines Testlaufs müssen die gemessenen Signale noch einmal überprüft und es muss eine maßgeschneiderte Auswertung durchgeführt werden. Diese aufwändige Arbeit, die derzeit "händisch" erfolgt, wird durch die erfindungsgemäßen Verfahren und Vorrichtungen erheblich erleichtert und verkürzt. Die Datenintegrität ist durch das Erfüllen der Manöverkriterien sichergestellt und die vorkonfigurierte Auswertung kann automatisch durchgeführt und präsentiert werden.
- Nach dem Testlauf kann eine automatische Reporterstellung erfolgen und es können vordefinierte KPIs (Key-Performance-Indikatoren) angezeigt werden.
- Die höhere Effizienz erlaubt einen Zugang gemäß dem "First-Time-Right"-Prinzip mit automatischer Nachverarbeitung und Reporterstellung.
- Durch die Verkürzung der notwendigen Arbeitszeit und die Möglichkeit, weniger intensiv geschultes Personal für das Fahren der Testläufe einsetzen zu können, können erhebliche Zeit- und Kosteneinsparungen realisiert werden.

### Bezugszeichen:

Testterminal 1
Fahrzeuginfrastruktur 2
ausführende Person 3
Recheneinheit 4
Benutzerschnittstelle 5
Datenschnittstelle 6
externer Sensor 7
Steuereinheit 8

## Patentansprüche

1. Testterminal (1) zur Unterstützung einer ausführenden Person (3) bei einem mit einer Fahrzeuginfrastruktur (2) durchgeführten Testlauf, wobei das Testterminal (1) zumindest eine Recheneinheit (4), zumindest eine Benutzerschnittstelle (5) und zumindest eine Datenschnittstelle (6), welche in der Lage ist, Daten von Komponenten der Fahrzeuginfrastruktur (2) zu empfangen, aufweist, wobei in einem Speicher der Recheneinheit (4) ein Testablaufplan mit einer Abfolge an vorkonfigurierten, während des Testlaufs auszuführenden Manövern gespeichert ist, wobei jedes Manöver eine definierte Abfolge an Submanövern aufweist und jedes Manöver zumindest ein Submanöver umfasst, wobei für jedes Submanöver der Abfolge an auszuführenden Manövern Kriterien definiert sind, wobei mit der Recheneinheit (4) der ausführenden Person (3) zumindest das jeweils auszuführende Manöver über die Benutzerschnittstelle (5) signalisierbar und dessen Ausführung anhand von über die Datenschnittstelle (6) empfangenen Fahrzeugmessdaten überwachbar ist und wobei das Testterminal (1) ausgebildet ist, die im Testablaufplan definierten Manöver nacheinander auszuführen, wobei das Ausführen eines Manövers das nacheinander Ausführen (103) der für dieses Manöver definierten Submanöver umfasst, und jeweils umfassend:
∘ Laden der für das aktuelle Submanöver definierten Kriterien,
∘ Signalisieren der Kriterien an eine ausführende Person (3),
∘ Ermitteln und Speichern von aktuellen Messdaten der Fahrzeuginfrastruktur (2),
∘ Überwachen der Kriterien durch Vergleich mit den aktuellen Messdaten der Fahrzeuginfrastruktur (2), und
∘ Abschließen des aktuellen Manövers bei Erreichen definierter Zielkriterien,
wobei ein Manöver als erfolgreich durchgeführt gilt, wenn alle Submanöver erfolgreich ausgeführt wurden und wobei das Testterminal (1) dazu eingerichtet ist, bei Eintreten eines Fehlerzustandes je nach Konfiguration des Submanövers und Art des Fehlers zu entscheiden, ob Korrekturvorschläge für das Submanöver angezeigt werden, oder ob das Submanöver, das Manöver oder der Testlauf als Ganzes abgebrochen wird.

2. Testterminal (1) nach Anspruch 1, **dadurch gekennzeichnet, dass** die Benutzerschnittstelle (5) zumindest einen Bildschirm und/oder zumindest einen Lautsprecher aufweist.

3. Testterminal (1) nach Anspruch 1 oder 2 **dadurch gekennzeichnet, dass** die Benutzerschnittstelle (5) ein Eingabegerät aufweist.

4. Testterminal (1) nach einem der Ansprüche 1 bis 3, **dadurch gekennzeichnet, dass** die Benutzerschnittstelle (5) ausgebildet ist, akustische und/oder visuelle Signale über zumindest eine in der Fahrzeuginfrastruktur (2) vorgesehene Signalisierungseinrichtung auszugeben.

5. Testterminal (1) nach einem der Ansprüche 1 bis 4, **dadurch gekennzeichnet, dass** die Datenschnittstelle (6) an ein internes Netzwerk, insbesondere an ein Bussystem der Fahrzeuginfrastruktur (2) anschließbar ist.

6. Testterminal (1) nach Anspruch 5, **dadurch gekennzeichnet, dass** die Datenschnittstelle (6) an eine in der Fahrzeuginfrastruktur vorgesehene Schnittstelle, insbesondere eine standardisierte Schnittstelle, anschließbar ist.

7. In ein Testterminal (1) implementiertes Verfahren zur Unterstützung einer ausführenden Person (3) bei einem mit einer Fahrzeuginfrastruktur (2) durchgeführten Testlauf, wobei das Testterminal (1) zumindest eine Recheneinheit (4), zumindest eine Benutzerschnittstelle (5) und zumindest eine Datenschnittstelle (6), welche in der Lage ist, Daten von Komponenten der Fahrzeuginfrastruktur (2) zu empfangen, aufweist, wobei das Verfahren die folgenden Schritte aufweist:
- Festlegen (101) eines Testablaufplans mit einer vordefinierten Abfolge an auszuführenden Manövern, wobei jedes Manöver eine definierte Abfolge an Submanövern aufweist und jedes Manöver zumindest ein Submanöver umfasst,
- Definieren von Kriterien für jedes Submanöver der Abfolge an auszuführenden Manövern,
- Starten (102) des Testlaufs,
- nacheinander Ausführen (103) der im Testablaufplan definierten Manöver, wobei das Ausführen eines Manövers das nacheinander Ausführen (103) der für dieses Manöver definierten Submanöver umfasst und umfassend
∘ Laden der für das aktuelle Submanöver definierten Kriterien,
∘ Signalisieren der Kriterien an eine ausführende Person (3),
∘ Ermitteln und Speichern von aktuellen Messdaten der Fahrzeuginfrastruktur (2),
∘ Überwachen der Kriterien durch Vergleich mit den aktuellen Messdaten der Fahrzeuginfrastruktur (2), und
∘ Abschließen des aktuellen Submanövers bei Erreichen definierter Zielkriterien,
- wobei ein Manöver als erfolgreich durchgeführt gilt, wenn alle Submanöver erfolgreich ausgeführt wurden,
- und wobei bei Eintreten eines Fehlerzustandes je nach Konfiguration des Submanövers und Art des Fehlers vom Testterminal (1) entschieden wird, ob Korrekturvorschläge für das Submanöver angezeigt werden, oder ob das Submanöver, das Manöver oder der Testlauf als Ganzes abgebrochen wird.

8. Verfahren nach Anspruch 7, **dadurch gekennzeichnet, dass** nach dem Abschließen des letzten Manövers eine Auswertung (104) von während des Ausführens gespeicherten Daten und gegebenenfalls eine automatisierte Reporterstellung erfolgt.

9. Verfahren nach Anspruch 7 oder 8 **dadurch gekennzeichnet, dass** während des Testlaufs Änderungen, insbesondere Änderungen von Kalibriergrößen, an der Fahrzeuginfrastruktur (2) vorgenommen werden.

10. Verfahren nach Anspruch 9, **dadurch gekennzeichnet, dass** nach einem Abschluss oder Abbruch des Testlaufs eine Funktionalität zum Rückgängigmachen zuvor vorgenommener Änderungen an der Fahrzeuginfrastruktur (2) implementiert ist.

11. Verfahren nach einem der Ansprüche 7 bis 9, **dadurch gekennzeichnet, dass** zum Definieren des Testablaufplans in einer Manöverbibliothek Manöver zur Auswahl bereitgestellt werden.

12. Computerprogramm umfassend Befehle, die bei der Ausführung des Programms durch die Recheneinheit (4) eines Testterminals (1) gemäß einem der Ansprüche 1 bis 6 dieses Testterminal (1) dazu veranlassen, die Verfahrensschritte gemäß einem der Ansprüche 7 bis 11 auszuführen.

## Claims

1. Test terminal (1) for assisting an operator (3) during a test run carried out with a vehicle infrastructure (2), wherein the test terminal (1) has at least one computing unit (4), at least one user interface (5) and at least one data interface (6) which is able to receive data from components of the vehicle infrastructure (2), wherein a test sequence plan comprising a sequence of preconfigured maneuvers to be performed during the test run is stored in a memory of the computing unit (4), wherein each maneuver has a defined sequence of sub-maneuvers and each maneuver comprises at least one sub-maneuver, wherein criteria are defined for each sub-maneuver of the sequence of maneuvers to be performed, wherein at least the particular maneuver to be performed can be signalled to the operator (3) by means of the computing unit (4) via the user interface (5) and the performance of said maneuver can be monitored on the basis of vehicle measurement data received via the data interface (6), and wherein the test terminal (1) is designed to perform the maneuvers defined in the test sequence plan one after the other, wherein performing a maneuver comprises performing (103) the sub-maneuvers defined for this maneuver one after the other, and in each case comprising:
∘ loading the criteria defined for the current sub-maneuver,
∘ signaling the criteria to an operator (3),
∘ determining and storing current measurement data of the vehicle infrastructure (2),
∘ monitoring the criteria by comparing them with the current measurement data from the vehicle infrastructure (2), and
∘ completing the current maneuver when defined target criteria are reached,
wherein a maneuver is considered to have been performed successfully if all sub-maneuvers have been performed successfully, and wherein the test terminal (1) is designed to decide, when an error state occurs, depending on the configuration of the sub-maneuver and the type of error, whether correction proposals for the sub-maneuver are displayed or whether the sub-maneuver, the maneuver or the test run as a whole is aborted.

2. Test terminal (1) according to claim 1, **characterized in that** the user interface (5) has at least one screen and/or at least one loudspeaker.

3. Test terminal (1) according to either claim 1 or claim 2, **characterized in that** the user interface (5) has an input device.

4. Test terminal (1) according to any of claims 1 to 3, **characterized in that** the user interface (5) is designed to output acoustic and/or visual signals via at least one signaling apparatus provided in the vehicle infrastructure (2).

5. Test terminal (1) according to any of claims 1 to 4, **characterized in that** the data interface (6) can be connected to an internal network, in particular to a bus system of the vehicle infrastructure (2).

6. Test terminal (1) according to claim 5, **characterized in that** the data interface (6) can be connected to an interface provided in the vehicle infrastructure, in particular a standardized interface.

7. Method implemented in a test terminal (1), for assisting an operator (3) during a test run carried out with a vehicle infrastructure (2), wherein the test terminal (1) has at least one computing unit (4), at least one user interface (5) and at least one data interface (6) which is able to receive data from components of the vehicle infrastructure (2), wherein the method comprises the following steps:
- establishing (101) a test sequence plan comprising a predefined sequence of maneuvers to be performed, wherein each maneuver has a defined sequence of sub-maneuvers and each maneuver comprises at least one sub-maneuver,
- defining criteria for each sub-maneuver of the sequence of maneuvers to be performed,
- starting (102) the test run,
- performing (103) the maneuvers defined in the test sequence plan one after the other, wherein performing a maneuver comprises performing (103) the sub-maneuvers defined for this maneuver one after the other, and comprising
∘ loading the criteria defined for the current sub-maneuver,
∘ signaling the criteria to an operator (3),
∘ determining and storing current measurement data of the vehicle infrastructure (2),
∘ monitoring the criteria by comparing them with the current measurement data from the vehicle infrastructure (2), and
∘ completing the current sub-maneuver when defined target criteria are reached,
- wherein a maneuver is considered to have been performed successfully if all sub-maneuvers have been performed successfully,
- and wherein, when an error state occurs, the test terminal (1) decides, depending on the configuration of the sub-maneuver and the type of error, whether correction proposals for the sub-maneuver are displayed or whether the sub-maneuver, the maneuver or the test run as a whole is aborted.

8. Method according to claim 7, **characterized in that**, after the last maneuver has been completed, data stored during the performance is evaluated (104) and, if necessary, an automated report is generated.

9. Method according to either claim 7 or claim 8, **characterized in that** changes, in particular changes to calibration variables, are made to the vehicle infrastructure (2) during the test run.

10. Method according to claim 9, **characterized in that**, after the test run has been completed or aborted, a functionality for undoing previously made changes to the vehicle infrastructure (2) is implemented.

11. Method according to any of claims 7 to 9, **characterized in that**, in order to define the test sequence plan, maneuvers are provided for selection in a maneuver library.

12. Computer program comprising instructions which, when the program is executed by the computing unit (4) of a test terminal (1) according to any of claims 1 to 6, prompt this test terminal (1) to carry out the method steps according to any of claims 7 to 11.

## Revendications

1. Terminal d'essai (1) permettant d'assister une personne exécutante (3) lors d'un passage d'essai effectué avec une infrastructure de véhicule (2), le terminal d'essai (1) présentant au moins une unité de calcul (4), au moins une interface utilisateur (5) et au moins une interface de données (6), laquelle étant capable de recevoir des données de composants de l'infrastructure de véhicule (2), un organigramme d'essai comportant une séquence de manœuvres préconfigurées à exécuter pendant le passage d'essai étant stocké dans une mémoire de l'unité de calcul (4), chaque manœuvre présentant une séquence définie de sous-manœuvres et chaque manœuvre comprenant au moins une sous-manœuvre, des critères étant définis pour chaque sous-manœuvre de la séquence de manœuvres à exécuter, au moins la manœuvre à exécuter respective pouvant être signalée avec l'unité de calcul (4) de la personne exécutante (3) par l'intermédiaire de l'interface utilisateur (5) et son exécution pouvant être surveillée au moyen de données de mesure de véhicule reçues par l'intermédiaire de l'interface de données (6) et le terminal d'essai (1) étant configuré pour exécuter les manœuvres définies dans l'organigramme d'essai successivement, l'exécution d'une manœuvre comprenant les exécutions successives (103) des sous-manœuvres définies pour ladite manœuvre, et comprenant respectivement :
∘ le chargement des critères définis pour la sous-manœuvre actuelle,
∘ le signalement des critères à une personne exécutante (3),
∘ la détermination et le stockage de données de mesure actuelles de l'infrastructure de véhicule (2),
∘ la surveillance des critères en les comparant aux données de mesure actuelles de l'infrastructure de véhicule (2), et
∘ l'achèvement de la manœuvre actuelle lorsque les critères cibles définis sont atteints,
une manœuvre étant considérée comme effectuée avec succès si toutes les sous-manœuvres ont été exécutées avec succès et le terminal d'essai (1) étant configuré pour décider si des propositions de correction pour la sous-manœuvre sont affichées, ou si la sous-manœuvre, la manœuvre ou le passage d'essai dans son ensemble est interrompu, lorsqu'un état d'erreur se produit en fonction de la configuration de la sous-manœuvre et du type d'erreur.

2. Terminal d'essai (1) selon la revendication 1, **caractérisé en ce que** l'interface utilisateur (5) présente au moins un écran et/ou au moins un haut-parleur.

3. Terminal d'essai (1) selon la revendication 1 ou 2, **caractérisé en ce que** l'interface utilisateur (5) présente un appareil de saisie.

4. Terminal d'essai (1) selon l'une des revendications 1 à 3, **caractérisé en ce que** l'interface utilisateur (5) est configurée pour émettre des signaux acoustiques et/ou visuels par l'intermédiaire d'au moins un dispositif de signalisation prévu dans l'infrastructure de véhicule (2).

5. Terminal d'essai (1) selon l'une des revendications 1 à 4, **caractérisé en ce que** l'interface de données (6) peut être connectée à un réseau interne, en particulier à un système de bus de l'infrastructure de véhicule (2).

6. Terminal d'essai (1) selon la revendication 5, **caractérisé en ce que** l'interface de données (6) peut être connectée à une interface prévue dans l'infrastructure de véhicule, en particulier une interface normalisée.

7. Procédé mis en œuvre dans un terminal d'essai (1) permettant d'assister une personne exécutante (3) lors d'un passage d'essai effectué avec une infrastructure de véhicule (2), le terminal d'essai (1) présentant au moins une unité de calcul (4), au moins une interface utilisateur (5) et au moins une interface de données (6), laquelle est capable de recevoir des données de composants de l'infrastructure de véhicule (2), le procédé présentant les étapes suivantes :
- établissement (101) d'un organigramme d'essai comportant une séquence prédéfinie de manœuvres à exécuter, chaque manœuvre présentant une séquence définie de sous-manœuvres et chaque manœuvre comprenant au moins une sous-manœuvre,
- définition de critères pour chaque sous-manœuvre de la séquence de manœuvres à exécuter,
- démarrage (102) du passage d'essai,
- exécutions successives (103) des manœuvres définies dans l'organigramme d'essai, l'exécution d'une manœuvre comprenant les exécutions successives (103) des sous-manœuvres définies pour ladite manœuvre, et comprenant
∘ le chargement des critères définis pour la sous-manœuvre actuelle,
∘ le signalement des critères à une personne exécutante (3),
∘ la détermination et le stockage de données de mesure actuelles de l'infrastructure de véhicule (2),
∘ la surveillance des critères en les comparant aux données de mesure actuelles de l'infrastructure de véhicule (2), et
∘ l'achèvement de la sous-manœuvre actuelle lorsque les critères cibles définis sont atteints,
- une manœuvre étant considérée comme effectuée avec succès si toutes les sous-manœuvres ont été exécutées avec succès,
- et le terminal d'essai (1) décidant si des propositions de correction pour la sous-manœuvre sont affichées ou si la sous-manœuvre, la manœuvre ou le passage d'essai dans son ensemble est interrompu, lorsqu'un état d'erreur se produit en fonction de la configuration de la sous-manœuvre et du type d'erreur.

8. Procédé selon la revendication 7, **caractérisé en ce qu'**après l'achèvement de la dernière manœuvre, une évaluation (104) de données stockées pendant l'exécution et, si nécessaire, une génération de rapport automatisée, ont lieu.

9. Procédé selon la revendication 7 ou 8, **caractérisé en ce que** des modifications, en particulier des modifications de grandeurs d'étalonnage, sont apportées à l'infrastructure de véhicule (2) pendant le passage d'essai.

10. Procédé selon la revendication 9, **caractérisé en ce qu'**après un achèvement ou une interruption du passage d'essai, une fonctionnalité permettant d'annuler les modifications apportées précédemment à l'infrastructure de véhicule (2) est mise en œuvre.

11. Procédé selon l'une des revendications 7 à 9, **caractérisé en ce que** pour définir l'organigramme d'essai, des manœuvres sont mises à disposition pour une sélection dans une bibliothèque de manœuvres.

12. Programme informatique comprenant des instructions qui, lorsque le programme est exécuté par l'unité de calcul (4) d'un terminal d'essai (1) selon l'une des revendications 1 à 6, amènent ledit terminal d'essai (1) à exécuter les étapes de procédé selon l'une des revendications 7 à 11.
